# EUROPEAN PATENT APPLICATION

(11) **EP 4 417 835 A1**
(43) Date of publication of application: **21.08.2024**
(21) Application number: 23835200.9
(22) Date of filing: 02.06.2023
(51) Int. Cl.: F16G 1/28, C08L 9/02, C08L 15/00, C08K 3/04

(54) **TOOTHED BELT**

(30) Priority: 05.07.2022 JP 2022108193
(71) Applicant: Bando Chemical Industries, Ltd., Kobe-shi, Hyogo 650-0047 (JP)
(72) Inventor: SHINDO Masahiro, Kobe-shi, Hyogo 650-0047 (JP); MEKI Yoshitaka, Kobe-shi, Hyogo 650-0047 (JP)
(74) Representative: Germain Maureau
(86) International application number: PCT/JP2023/020581
(87) International publication number: WO 2024/009664

(57) **Abstract**

A toothed belt (B) includes a belt body (11) made of a rubber composition. The rubber composition contains a hydrogenated nitrile rubber having a bound acrylonitrile content of 15% by mass or more and 30% by mass or less, has a hardness of A70 or more and A80 or less at a test temperature of 25°C, and has a cold resistance index of 0.25 or less after being heat-aged by being exposed to an atmosphere at a temperature of 140°C for 144 hours, the cold resistance index being defined by the following formula (I): Cold Resistance Index = 5% Modulus at Test Temperature of -40°C / Hardness at Test Temperature of 25°C

## Description

### TECHNICAL FIELD

The present invention relates to a toothed belt.

### BACKGROUND ART

A toothed belt including a belt body made of a rubber composition containing a hydrogenated nitrile rubber is known (e.g., Patent Document 1).

### CITATION LIST

### PATENT DOCUMENTS

Patent Document 1: Japanese Patent No. 5465346

### SUMMARY OF THE INVENTION

The present invention is directed to a toothed belt including a belt body made of a rubber composition. The rubber composition contains a hydrogenated nitrile rubber having a bound acrylonitrile content of 15% by mass or more and 30% by mass or less, has a hardness of A70 or more and A80 or less at a test temperature of 25°C, and has a cold resistance index of 0.25 or less after being heat-aged by being exposed to an atmosphere at a temperature of 140°C for 144 hours, the cold resistance index being defined by the following formula (I): Cold Resistance Index = 5% Modulus at Test Temperature of -40°C / Hardness at Test Temperature of 25°C

### BRIEF DESCRIPTION OF THE DRAWINGS

FIG. 1A is a perspective view of a piece of a toothed belt of an embodiment.
FIG. 1B is a front view as viewed in the direction of arrow X in FIG. 1A.
FIG. 1C is a front view as viewed in the direction of arrow Y in FIG. 1A.
FIG. 1D is a cross-sectional view taken along the line ID-ID (for two teeth) in FIG. 1B.
FIG. 2 is a partial cross-sectional view of a belt forming mold.
FIG. 3A is a first diagram for showing a method for forming the toothed belt according to the embodiment.
FIG. 3B is a second diagram for showing the method for forming the toothed belt according to the embodiment.
FIG. 3C is a third diagram for showing the method for forming the toothed belt according to the embodiment.
FIG. 4 is a diagram illustrating a layout of pulleys of a static skip torque measuring device.
FIG. 5 is a diagram illustrating a layout of pulleys of a belt running tester for belt running tests for cold resistance.

### DESCRIPTION OF EMBODIMENTS

An embodiment will be described in detail below with reference to the drawings.

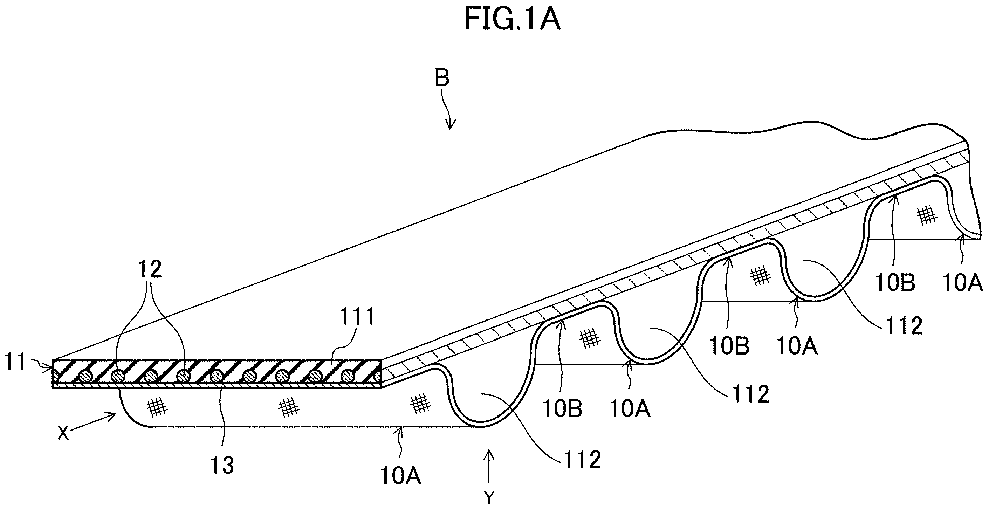

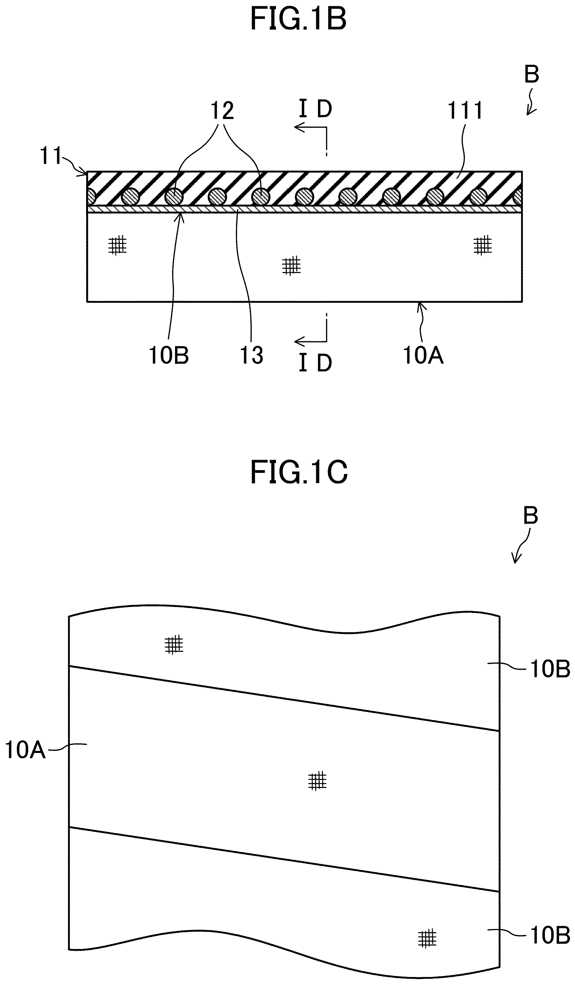

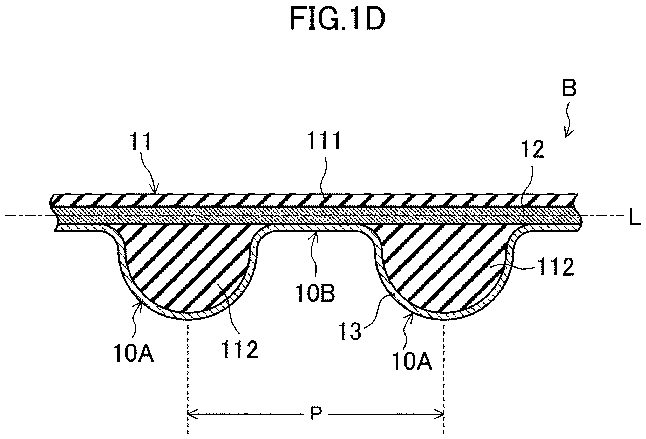

FIGS. 1A to 1D illustrate a toothed belt B of an embodiment. The toothed belt B of the embodiment is, for example, an endless synchronous power transmission belt attached to an electric power steering device of an automobile.

The toothed belt B of the embodiment includes a plurality of teeth 10A forming an inner peripheral portion of the toothed belt B and spaced from one another in the belt circumferential direction at a predetermined pitch. The teeth 10A are what is called "helical teeth" configured as ridges extending in a direction inclined with respect to the belt width direction. The teeth 10A are what is called round teeth each having a semicircular cross-sectional shape. The teeth 10A may be configured as ridges extending in the belt width direction or may be teeth having another shape, such as trapezoidal teeth having a trapezoidal cross-sectional shape.

The toothed belt B of the embodiment has a belt circumferential length (a belt length along a belt pitch line L) of, for example, 100 mm or more and 400 mm or less. The belt width is, for example, 4 mm or more and 40 mm or less. The maximum belt thickness is, for example, 1.1 mm or more and 3.0 mm or less.

The teeth 10A have a pitch P of, for example, 0.50 mm or more and 3.0 mm or less. The teeth 10A each have a height of, for example, 0.50 mm or more and 2.0 mm or less, where the height is defined by the dimension from a tooth bottom 10B between a pair of teeth 10A adjacent to each other in the belt circumferential direction to the top of the tooth 10A. The teeth 10A each have a width of, for example, 0.8 mm or more and 3.3 mm or less, where the width is defined by the dimension between the edges of a pair of tooth bottoms 10B adjacent to each other in the belt circumferential direction with the tooth 10A sandwiched therebetween. The teeth 10A each have an inclination angle of, for example, more than 0° and 15° or less with respect to the belt width direction.

The toothed belt B of the embodiment includes a belt body 11, a cord 12, and a reinforcing fabric 13.

The belt body 11 includes a backface rubber portion 111 in a flat band-like shape and a plurality of toothed rubber portions 112 on the inner peripheral side of the backface rubber portion 111 which are spaced from one another in the belt circumferential direction at a predetermined pitch. The backface rubber portion 111 has a thickness of, for example, 0.30 mm or more and 1.6 mm or less. The plurality of toothed rubber portions 112 are each integrated with the backface rubber portion 111. The toothed rubber portions 112 each have a height of, for example, 0.50 mm or more and 2.0 mm or less, where the height is defined by the dimension from the innermost peripheral portion of the cord 12 buried in the backface rubber portion 111 to the top of the toothed rubber portion 112.

The belt body 11 is made of a rubber composition X produced by heating and pressing an uncrosslinked rubber composition containing a rubber component to which various compound ingredients are added, and thereby crosslinking the rubber component by a crosslinking agent.

The rubber composition X contains, as the rubber component, a hydrogenated nitrile rubber (hereinafter referred to as "specific H-NBR") having a bound acrylonitrile content of 15% by mass or more and 30% by mass or less. The bound acrylonitrile content of the specific H-NBR is suitably 25% by mass or less and more suitably 20% by mass or less in order to obtain superior heat resistance and cold resistance. The iodine value of the specific H-NBR is suitably 8 mg/100 mg or more and 20 mg/100 mg or less and more suitably 12 mg/100 mg or more and 18 mg/100 mg or less for the same purpose.

The content of the specific H-NBR in the rubber component is suitably 50% by mass or more, more suitably 90% by mass or more, and still more suitably 100% by mass in order to obtain superior heat resistance and cold resistance. The rubber component may contain a hydrogenated nitrile rubber other than the specific H-NBR. The rubber component may contain, for example, chloroprene rubber and ethylene-α-olefin elastomer such as ethylene-propylene-diene terpolymer (EPDM), other than the hydrogenated nitrile rubber.

The rubber composition X suitably contains carbon black as a compound ingredient in order to obtain superior mechanical strength and superior heat resistance and cold resistance.

Examples of the carbon black include, for example: channel black; furnace black such as SAF, ISAF, N-339, HAF, N-351, MAF, FEF, SRF, GPF, ECF, and N-234; thermal black such as FT and MT; and acetylene black. The carbon black suitably includes one kind or two or more kinds of these substances. The carbon black more suitably includes carbon black having an average particle diameter of 30 nm or less, and even more suitably includes HAF, in order to obtain superior mechanical strength and superior heat resistance and cold resistance.

The content of the carbon black in the not-yet-crosslinked rubber composition is suitably 40 parts by mass or more and 80 parts by mass or less and more suitably 55 parts by mass or more and 65 parts by mass or less relative to 100 parts by mass of the specific H-NBR in order to obtain superior mechanical strength and superior heat resistance and cold resistance.

The rubber composition X suitably contains a plasticizer as a compound ingredient in order to obtain superior heat resistance and cold resistance.

Examples of the plasticizer include, for example: trimellitic acid isononyl ester; polyetherester; dialkyl sebacate such as dioctyl sebacate (DOS); dialkyl phthalate such as dibutyl phthalate (DBP) and dioctyl phthalate (DOP); and dialkyl adipate such as dioctyl adipate (DOA). The plasticizer suitably includes one kind or two or more kinds of these substances. The plasticizer more suitably includes trimellitic acid isononyl ester and/or polyetherester, and even more suitably includes trimellitic acid isononyl ester, in order to obtain superior heat resistance and cold resistance.

The content of the plasticizer in the not-yet-crosslinked rubber composition is suitably 15 parts by mass or more and 40 parts by mass or less and more suitably 20 parts by mass or more and 30 parts by mass or less relative to 100 parts by mass of the specific H-NBR in order to obtain superior heat resistance and cold resistance.

The specific H-NBR of the rubber composition X is suitably crosslinked using organic peroxide as a crosslinking agent in order to obtain superior heat resistance and cold resistance.

Examples of the organic peroxide include, for example, α,α'-di(t-butylperoxy)diisopropylbenzene, dicumyl peroxide, 1,3-bis(t-butylperoxyisopropyl)benzene, and 2,5-dimethyl-2,5-di(t-butylperoxy)hexane. The organic peroxide suitably includes one kind or two or more kinds of the these substances, and more suitably includes α,α'-di(t-butylperoxy)diisopropylbenzene in order to obtain superior heat resistance and cold resistance.

The content of the organic peroxide as a crosslinking agent in the not-yet-crosslinked rubber composition is suitably 1.6 parts by mass or more and 3.2 parts by mass or less and more suitably 2 parts by mass or more and 2.8 parts by mass or less relative to 100 parts by mass of the specific H-NBR in order to obtain superior heat resistance and cold resistance.

The specific H-NBR of the rubber composition X is suitably crosslinked using sulfur as a crosslinking agent in addition to the organic peroxide in order to obtain superior heat resistance and cold resistance. In this case, the content of the sulfur as a crosslinking agent in the not-yet-crosslinked rubber composition is suitably 0.1 parts by mass or more and 0.5 parts by mass or less relative to 100 parts by mass of the specific H-NBR for the same purpose. The content of the sulfur is suitably less than that of the organic peroxide for the same purpose.

The specific H-NBR of the rubber composition X may be crosslinked using only sulfur as a crosslinking agent.

If the organic peroxide is used as the crosslinking agent, the specific H-NBR of the rubber composition X is suitably crosslinked using a co-crosslinking agent as well, in order to obtain superior heat resistance and cold resistance.

Examples of the co-crosslinking agent include, for example, trimethylolpropane trimethacrylate, m-phenylene maleimide, triallyl isocyanurate, ethylene glycol dimethacrylate, and liquid polybutadiene. The co-crosslinking agent suitably includes one kind or two or more kinds of these substances. The co-crosslinking agent more suitably includes trimethylolpropane trimethacrylate, and even more suitably includes m-phenylene maleimide in addition to trimethylolpropane trimethacrylate, in order to obtain superior heat resistance and cold resistance.

The content of the co-crosslinking agent in the not-yet-crosslinked rubber composition is suitably 10 parts by mass or less relative to 100 parts by mass of the specific H-NBR in order to obtain superior heat resistance and cold resistance. If the co-crosslinking agent includes trimethylolpropane trimethacrylate, the content of the trimethylolpropane trimethacrylate in the not-yet-crosslinked rubber composition is suitably 2 parts by mass or more and 4 parts by mass or less relative to 100 parts by mass of the specific H-NBR for the same purpose. If the co-crosslinking agent includes trimethylolpropane trimethacrylate and m-phenylene maleimide, the content of the m-phenylene maleimide in the not-yet-crosslinked rubber composition is suitably 1 part by mass or more and 6 parts by mass or less relative to 100 parts by mass of the specific H-NBR for the same purpose. The content of the trimethylolpropane trimethacrylate is suitably less than that of the m-phenylene maleimide for the same purpose.

The rubber composition X may contain other compound ingredients, such as a vulcanization accelerator aid such as a zinc oxide (zinc white), an antioxidant, and an inorganic filler such as silica.

The rubber composition X has a hardness of A70 or more and A80 or less at a test temperature of 25°C. The hardness of the rubber composition X is suitably A71 or more and A78 or less in order to obtain superior heat resistance and cold resistance. Here, the hardness of the rubber composition X is measured with a type A durometer at a test temperature of 25°C based on JIS K6253-3: 2012.

The rubber composition X has a cold resistance index of 0.25 or less after being heat-aged by being exposed to an atmosphere at the temperature of 140°C for 144 hours. The cold resistance index of the rubber composition X is suitably 0.2 or less and more suitably 0.15 or less in order to obtain superior heat resistance and cold resistance.

Here, the heat-aging of the rubber composition X is conducted based on Method A of JIS K6257: 2017.

The cold resistance index of the rubber composition X is defined by the following formula (I): Cold Resistance Index = 5% Modulus at Test Temperature of -40°C / Hardness at Test Temperature of 25°C

The 5% modulus of the rubber composition X is a tensile stress at 5% elongation obtained from a test result of a tensile test conducted at a test temperature of 40°C based on JIS K6251: 2010. The hardness of the rubber composition X is measured with a type A durometer at a test temperature of 25°C based on JIS K6253-3: 2012.

The cord 12 is embedded in an inner peripheral portion of the backface rubber portion 111 of the belt body 11 so as to form a helical pattern with a pitch in the belt width direction. The cord 12 has an outer diameter of, for example, 0.15 mm or more and 0.80 mm or less.

The cord 12 is made of twisted yarn of glass fibers, aramid fibers, carbon fibers, metal fibers, and the like. The cord 12 is suitably comprised of S-twist yarn and Z-twist yarn so as to form a double helical pattern, but may be comprised of single S-twist yarn or single Z-twist yarn. For adhesion to the belt body 11, the cord 12 is suitably subjected to at least one of the following adhesion treatments: an RFL treatment by which the cord 12 is immersed in what is called an RFL aqueous solution and then heated; or a rubber cement treatment by which the cord 12 is immersed in rubber cement and then dried. Before the adhesion treatment, the cord 12 may be subjected to a base treatment by which the cord 12 is immersed in an epoxy solution or an isocyanate solution and then heated.

The reinforcing fabric 13 is attached to, and covers, an inner peripheral surface of the belt body 11 where the plurality of toothed rubber portions 112 are formed. Thus, the toothed rubber portions 112 covered by the reinforcing fabric 13 form the teeth 10A. At the tooth bottom 10B, the cord 12 is embedded in the inner peripheral portion of the backface rubber portion 111 of the belt body 11 so as to be located immediately inside the reinforcing fabric 13. The reinforcing fabric 13 has a thickness of, for example, 0.050 mm or more and 0.30 mm or less.

The reinforcing fabric 13 is, for example, a woven fabric, a knitted fabric, an unwoven fabric, or the like made of yarn of nylon fibers (polyamide fibers), polyester fibers, aramid fibers, cotton, or the like. Among these, the reinforcing fabric 13 is suitably a woven fabric of nylon fibers. The reinforcing fabric 13 is suitably stretchable like a woven fabric with wooly finished weft, for example. For adhesion to the belt body 11, the reinforcing fabric 13 is subjected to one kind or two or more kinds of the following adhesion treatments: an RFL treatment by which the reinforcing fabric 13 is immersed in what is called an RFL aqueous solution and then heated; a soaking treatment by which the reinforcing fabric 13 is immersed in low viscosity rubber cement and then dried; and/or a coating treatment by which high viscosity rubber cement is applied to a surface of the reinforcing fabric 13 facing the belt body 11 and then dried. Before the adhesion treatment, the reinforcing fabric 13 may be subjected to a base treatment by which the reinforcing fabric 13 is immersed in an epoxy solution or an isocyanate solution and then heated.

According to the toothed belt B of the embodiment having the above configurations, the rubber composition X forming the belt body 11 contains the specific H-NBR having a bound acrylonitrile content of 15% by mass or more and 30% by mass or less. The rubber composition X has a hardness of A70 or more and A80 or less at a test temperature of 25°C and has a cold resistance index of 0.25 or less after being heat-aged by being exposed to an atmosphere at a temperature of 140°C for 144 hours. These configurations can achieve superior meshing with pulleys and superior cold resistance.

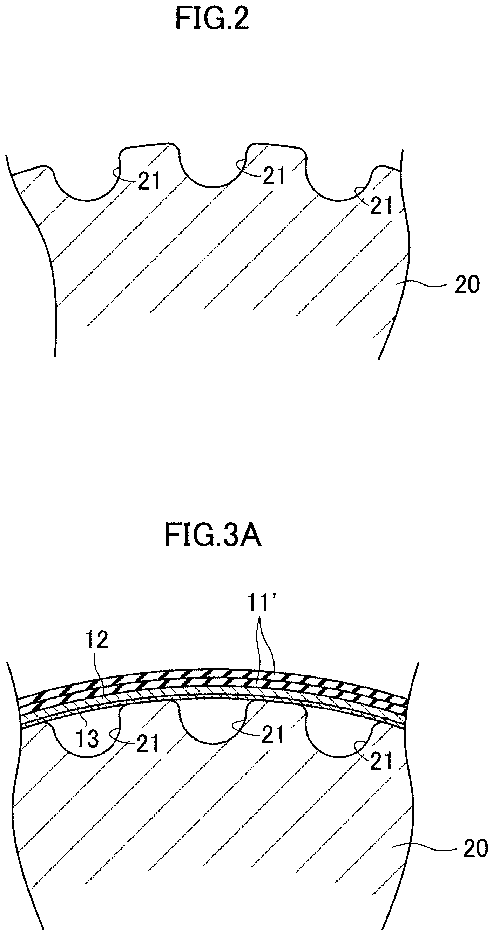

Next, a method for forming the toothed belt B of the embodiment will be described with reference to FIG. 2 and FIGS. 3A to 3C. The method for forming the toothed belt B of the embodiment includes a material preparation step, a shaping step, a crosslinking step, and a finishing step.

### <Material Preparation Step>

An uncrosslinked rubber composition is produced by masticating a rubber component containing a specific H-NBR, and putting various compound ingredients thereto and kneading the mixture. This uncrosslinked rubber composition is shaped into an uncrosslinked rubber composition sheet 11' by a calender. The cord 12 is subjected to an adhesive treatment. The reinforcing fabric 13 is subjected to an adhesive treatment and then formed into a cylindrical shape.

### <Shaping Step>

FIG. 2 shows a belt forming mold 20. The belt forming mold 20 is cylindrical and has an outer peripheral surface provided with a plurality of tooth formation grooves 21 extending in a direction inclined with respect to the axial direction and which are spaced from another in the circumferential direction.

As shown in FIG. 3A, the cylindrical reinforcing fabric 13 is placed over the outer peripheral surface of the belt forming mold 20. The cord 12 is wound thereon helically. Further, the uncrosslinked rubber composition sheet 11' is wound thereon. An uncrosslinked slab S' is formed on the belt forming mold 20 in this manner.

### <Crosslinking Step>

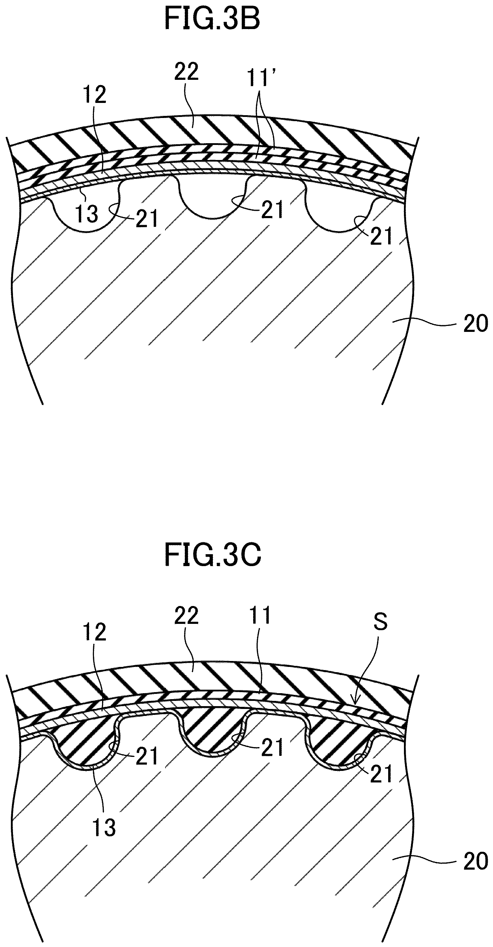

As shown in FIG. 3B, a rubber sleeve 22 is placed over the uncrosslinked slab S' on the belt forming mold 20. This product is put in a vulcanizer, and the vulcanizer is sealed. The vulcanizer is filled with high-temperature and high-pressure steam and maintained in this state for a predetermined period of time. At this time, the uncrosslinked slab S' is pressed toward the belt forming mold 20 and heated. The uncrosslinked rubber composition sheet 11' passes between the cords 12 and flows into each of the plurality of tooth formation grooves 21 of the belt forming mold 20, while pressing the reinforcing fabric 13, and is crosslinked. At the same time, the cord 12 and the reinforcing fabric 13 are integrated with each other. As shown in FIG. 3C, a cylindrical belt slab S is eventually formed on the belt forming mold 20.

### <Finishing Step>

The inside of the vulcanizer is decompressed, and the vulcanizer is unsealed. The belt slab S formed between the belt forming mold 20 and the rubber sleeve 22 is demolded. The toothed belt B of the embodiment is obtained by cutting the belt slab S into round slices having a predetermined width.

### [Examples]

### (Toothed Belt)

The toothed belts of Examples 1 to 6 and Comparative Examples 1 to 3 described below were produced. The composition of each belt is also shown in Table 1.

### <Example 1>

An H-NBR (Zetpol 4310 manufactured by Zeon Corporation, iodine value of 15 mg/100 mg) containing a rubber component having a bound acrylonitrile content of 18.6% by mass was put in a chamber of a sealed Banbury mixer and masticated. Then, relative to 100 parts by mass of the H-NBR, the following substances were added thereto and kneaded: 5 parts by mass of zinc oxide (Zinc Oxide No. 2 manufactured by SAKAI CHEMICAL INDUSTRY CO., LTD.) as a vulcanization accelerator aid; 2 parts by mass of a benzimidazole-based antioxidant (NOCRAC MB manufactured by Ouchi Shinko Chemical Industrial Co., Ltd.); 0.5 parts by mass of aromatic secondary amine-based antioxidant (NOCRAC CD manufactured by Ouchi Shinko Chemical Industrial Co., Ltd.); 51.9 parts by mass of HAF (SEAST 3 manufactured by TOKAI CARBON CO., LTD., average particle diameter of 28 µm) as carbon black; 17.5 parts by mass of trimellitic acid isononyl ester (ADK CIZER C-9N manufactured by ADEKA CORPORATION) as a plasticizer; 3 part by mass of trimethylolpropane trimethacrylate (HIGH-CROSS M manufactured by Seiko Chemical Co., Ltd.) as a co-crosslinking agent; 2 parts by mass of m-phenylene dimaleimide (Vulnoc PM manufactured by Ouchi Shinko Chemical Industrial Co., Ltd.) as a co-crosslinking agent; 6.0 parts by mass (2.4 parts by mass of active ingredient) of organic peroxide (PEROXYMONE F40 manufactured by NOF CORPORATION, purity of 40% by mass) as a crosslinking agent; and 0.3 parts by mass of sulfur (Oil Sulfur manufactured by NIPPON KANRYU INDUSTRY CO., LTD.) as a crosslinking agent. An uncrosslinked rubber composition was thus obtained.

A toothed belt having a belt body made of a rubber composition obtained by crosslinking the above uncrosslinked rubber composition and having the same configuration as that of the above embodiment was produced as a toothed belt of Example 1. Twisted yarn made of glass fibers subjected to an adhesion treatment was used as a cord. A woven fabric made of nylon 6,6 fibers subjected to an adhesion treatment was used as a reinforcing fabric. The toothed belt of Example 1 has a belt circumferential length of 330 mm, a belt width of 25 mm, and a tooth pitch of 2 mm.

### <Example 2>

A toothed belt having the same configuration as that of Example 1 was produced as a toothed belt of Example 2 except that in the uncrosslinked rubber composition, the content of HAF as carbon black and the content of trimellitic acid isononyl ester as a plasticizer were 63.1 parts by mass and 15.3 parts by mass, respectively, relative to 100 parts by mass of the H-NBR.

### <Example 3>

A toothed belt having the same configuration as that of Example 1 was produced as a toothed belt of Example 3 except that in the uncrosslinked rubber composition, the content of HAF as carbon black and the content of trimellitic acid isononyl ester as a plasticizer were 70 parts by mass and 21 parts by mass, respectively, relative to 100 parts by mass of the H-NBR.

### <Example 4>

A toothed belt having the same configuration as that of Example 2 was produced as a toothed belt of Example 4 except that in the uncrosslinked rubber composition, the content of trimellitic acid isononyl ester as a plasticizer was 26.7 parts by mass relative to 100 parts by mass of the H-NBR.

### <Example 5>

A toothed belt having the same configuration as that of Example 3 was produced as a toothed belt of Example 5 except that in the uncrosslinked rubber composition, the content of HAF as a carbon black was 60 parts by mass relative to 100 parts by mass of the H-NBR.

### <Example 6>

A toothed belt having the same configuration as that of Example 5 was produced as a toothed belt of Example 6 except that instead of trimellitic acid isononyl ester as a plasticizer, 36 parts by mass of a polyetherester plasticizer 1 (ADK CIZER RS-700 manufactured by ADEKA CORPORATION) relative to 100 parts by mass of the H-NBR was added to the uncrosslinked rubber composition, that 20 parts by mass of silica (ULTRASII, VN3 manufactured by Evonik Japan Co., Ltd.) as an inorganic filler relative to 100 parts by mass of the H-NBR was added to the uncrosslinked rubber composition, and that the content of m-phenylene dimaleimide as a co-crosslinking agent in the uncrosslinked rubber composition was 6 parts by mass relative to 100 parts by mass of the H-NBR.

### <Comparative Example 1>

A toothed belt having the same configuration as that of Example 6 was produced as a toothed belt of Comparative Example 1 except that in the uncrosslinked rubber composition, the content of HAF as carbon black, the content of polyetherester plasticizer, and the content of m-phenylene dimaleimide as a co-crosslinking agent were 20 parts by mass, 8 parts by mass, and 2 parts by mass, respectively, relative to 100 parts by mass of the H-NBR.

### <Comparative Example 2>

A toothed belt having the same configuration as that of Comparative Example 1 was produced as a toothed belt of Comparative Example 2 except that in the uncrosslinked rubber composition, the content of HAF as carbon black was 30 parts by mass relative to 100 parts by mass of the H-NBR, and that instead of the polyetherester plasticizer 1, 15 parts by mass of a polyetherester plasticizer 2 (ADK CIZER RS-966 manufactured by ADEKA CORPORATION) relative to 100 parts by mass of the H-NBR was added to the uncrosslinked rubber composition.

### <Comparative Example 3>

A toothed belt having the same configuration as that of Example 1 was produced as a toothed belt of Comparative Example 3 except that in the uncrosslinked rubber composition, the content of trimellitic acid isononyl ester as a plasticizer was 24.5 parts by mass relative to 100 parts by mass of the H-NBR.

**[Table 1]**

| | | Example | | | | | | Comparative Example | | |
|---|---|---|---|---|---|---|---|---|---|---|
| | | 1 | 2 | 3 | 4 | 5 | 6 | 1 | 2 | 3 |
| Rubber Component | H-NBR | 100 | 100 | 100 | 100 | 100 | 100 | 100 | 100 | 100 |
| Vulcanization Accelerator Aid | Zinc Oxide | 5 | 5 | 5 | 5 | 5 | 5 | 5 | 5 | 5 |
| Antioxidant | Benzimidazole-Based Antioxidant | 2 | 2 | 2 | 2 | 2 | 2 | 2 | 2 | 2 |
| | Aromatic Secondary Amine-Based Antioxidant | 0.5 | 0.5 | 0.5 | 0.5 | 0.5 | 0.5 | 0.5 | 0.5 | 0.5 |
| Carbon Black | HAF | 51.9 | 63.1 | 70 | 63.1 | 60 | 60 | 20 | 30 | 51.9 |
| Inorganic Filler | Silica | | | | | | 20 | 20 | 20 | |
| Plasticizer | Trimellitic Acid Isononyl Ester | 17.5 | 15.3 | 21 | 26.7 | 21 | | | | 24.5 |
| | Polyetherester Plasticizer 1 | | | | | | 36 | 8 | | |
| | Polyetherester Plasticizer 2 | | | | | | | | 15 | |
| Co-Crosslinking Agent | Trimethylolpropane Trimethacrylate | 3 | 3 | 3 | 3 | 3 | 3 | 3 | 3 | 3 |
| | m-Phenylene Dimaleimide | 2 | 2 | 2 | 2 | 2 | 6 | 2 | 2 | 2 |
| Crosslinking Agent | Organic Peroxide | 6 (2.4) | 6 (2.4) | 6 (2.4) | 6 (2.4) | 6 (2.4) | 6 (2.4) | 6 (2.4) | 6 (2.4) | 6 (2.4) |
| | Sulfur | 0.3 | 0.3 | 0.3 | 0.3 | 0.3 | 0.3 | 0.3 | 0.3 | 0.3 |

### (Test Evaluation Methods and Results)

The following test evaluations were conducted for each of Examples 1 to 6 and Comparative Examples 1 to 3. The results are shown in Table 2.

### <Hardness>

For each of Examples 1 to 6 and Comparative Examples 1 to 3, the hardness of the rubber composition forming the belt body of the toothed belt was measured with a type A durometer at a test temperature of 25°C based on JIS K6253-3: 2012.

Based on Method A of JIS K6257: 2017, each rubber composition was heat-aged by being exposed to an atmosphere at a temperature of 140°C for 144 hours, and then the hardness was measured at a test temperature of 25°C with a type A durometer in a similar manner.

### <5% Modulus>

For each of Examples 1 to 6 and Comparative Examples 1 to 3, a tensile test of the rubber composition forming the belt body of the toothed belt was conducted at a test temperature of -40°C based on JIS K6251: 2010, and a tensile stress at 5% elongation in the test result was defined as a 5% modulus.

### <Cold Resistance Index>

For each of Examples 1 to 6 and Comparative Examples 1 to 3, a cold resistance index of the rubber composition forming the belt body of the toothed belt was calculated, where the cold resistance index is defined by the following formula (I): Cold Resistance Index = 5% Modulus at Test Temperature of -40°C / Hardness at Test Temperature of 25°C

### <Static Skip Torque>

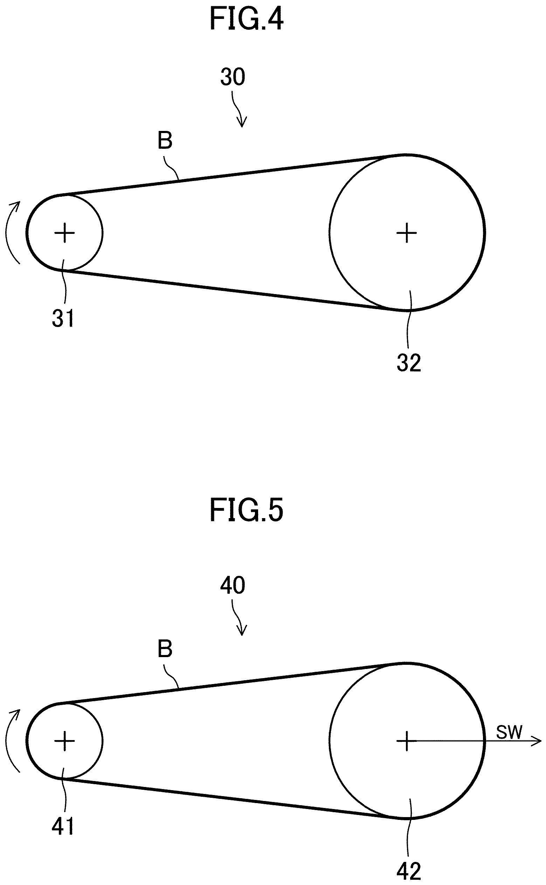

FIG. 4 is a diagram illustrating a layout of pulleys of a static skip torque measuring device 30 for testing and evaluating the meshing between a toothed belt and a pulley. The static skip torque measuring device 30 includes a drive pulley 31 and a driven pulley 32 laterally spaced apart from each other. The drive pulley 31 has 40 teeth, and the driven pulley 32 has 110 teeth. The driven pulley 32 is movable in the lateral direction.

For each of Examples 1 to 6 and Comparative Examples 1 to 3, the toothed belt B was wrapped around the drive pulley 31 and the driven pulley 32 of the static skip torque measuring device 30. The driven pulley 32 was moved laterally to, and fixed at, a position where a belt tension of 100N was applied to the toothed belt B. The driven pulley 32 was locked and unable to rotate. On the other hand, torque was applied to the drive pulley 31 and increased. The torque at which tooth skipping (i.e., jumping) occurred on the driven pulley 32 was defined as static skip torque. The static skip torque of 13.0 N·m or more was graded A, and the static skip torque of less than 13.0 N·m was graded B.

### <Belt Running Test for Cold Resistance>

FIG. 5 is a diagram illustrating a layout of pulleys of a belt running tester 40 for belt running tests for cold resistance. The belt running tester 40 includes a drive pulley 41 and a driven pulley 42 laterally spaced apart from each other. The drive pulley 41 has 40 teeth, and the driven pulley 42 has 110 teeth. The driven pulley 42 is configured such that an axial load (SW) can be applied in the lateral direction.

For each of Examples 1 to 6 and Comparative Examples 1 to 3, the toothed belt B was held in an oven at a temperature of 140°C for 144 hours for heat-aging. The heat-aged toothed belt B was wrapped around the drive pulley 41 and the driven pulley 42 of the belt running tester 40. The axial load (SW) was applied to the driven pulley 42 so that a belt tension of 100 N was applied to the toothed belt B. Then, 500 cycles of operation were conducted in an atmosphere at a temperature of -40°C, where one cycle of operation consists of belt running for one minute by rotating the drive pulley 41 at a rotation speed of 1000 rpm without a load and cessation for 30 minutes. After that, whether there was a crack in the outer peripheral surface of the toothed belt B was visually inspected. The toothed belt B without a crack was graded A, and the toothed belt B with a crack was graded B.

**[Table 2]**

| | | Example | | | | | | Comparative Example | | |
|---|---|---|---|---|---|---|---|---|---|---|
| | | 1 | 2 | 3 | 4 | 5 | 6 | 1 | 2 | 3 |
| Hardness (without heat-aging) | A | 71 | 77 | 77 | 72 | 73 | 79 | 70 | 69 | 66 |
| Hardness (with heat-aging) | A | 78 | 83 | 83 | 78 | 80 | 88 | 74 | 75 | 73 |
| 5% Modulus | MPa | 13.03 | 17.61 | 16.14 | 10.11 | 14.97 | 10.03 | 19.1 | 12.31 | 9.59 |
| Cold Resistance Index | - | 0.17 | 0.21 | 0.19 | 0.13 | 0.19 | 0.11 | 0.26 | 0.16 | 0.13 |
| Static Skip Torque | N·m | 15.3 | 16.3 | 15.8 | 15.3 | 15.3 | 17.3 | 13.3 | 12.8 | 12.3 |
| | Grade | A | A | A | A | A | A | A | B | B |
| Belt Running Test for Cold Resistance | - | A | A | A | A | A | A | B | A | A |

### INDUSTRIAL APPLICABILITY

The present invention is useful in the technical field of toothed belts.

### DESCRIPTION OF REFERENCE CHARACTERS

- B: Toothed Belt
- S': Uncrosslinked Slab
- S: Belt Slab
- 10A: Tooth
- 10B: Tooth Bottom
- 11: Belt Body
- 11': Uncrosslinked Rubber Composition Sheet
- 111: Backface Rubber Portion
- 112: Toothed Rubber Portion
- 12: Cord
- 13: Reinforcing Fabric
- 20: Belt Forming Mold
- 21: Tooth Formation Groove
- 22: Rubber Sleeve
- 30: Static Skip Torque Measuring Device
- 31: Drive Pulley
- 32: Driven Pulley
- 40: Belt Running Tester
- 41: Drive Pulley
- 42: Driven Pulley

## Claims

1. A toothed belt including a belt body made of a rubber composition, wherein
the rubber composition
contains a hydrogenated nitrile rubber having a bound acrylonitrile content of 15% by mass or more and 30% by mass or less,
has a hardness of A70 or more and A80 or less at a test temperature of 25°C, and
has a cold resistance index of 0.25 or less after being heat-aged by being exposed to an atmosphere at a temperature of 140°C for 144 hours, the cold resistance index being defined by the following formula (I): Cold Resistance Index = 5% Modulus at Test Temperature of -40°C / Hardness at Test Temperature of 25°C

2. The toothed belt of claim 1, wherein
the hydrogenated nitrile rubber has an iodine value of 8 mg/100 mg or more and 20 mg/100 mg or less.

3. The toothed belt of claim 1 or 2, wherein
the rubber composition contains carbon black having an average particle diameter of 30 nm or less.

4. The toothed belt of claim 3, wherein
the carbon black includes HAF.

5. The toothed belt of claim 3 or 4, wherein
a content of the carbon black in a not-yet-crosslinked rubber composition, which is the rubber composition before crosslinking, is 40 parts by mass or more and 80 parts by mass or less relative to 100 parts by mass of the hydrogenated nitrile rubber.

6. The toothed belt of any one of claims 1 to 5, wherein
the rubber composition contains a plasticizer.

7. The toothed belt of claim 6, wherein
the plasticizer includes trimellitic acid isononyl ester and/or polyetherester.

8. The toothed belt of any one of claims 1 to 7, wherein
the hydrogenated nitrile rubber of the rubber composition is crosslinked using organic peroxide.

9. The toothed belt of claim 8, wherein
the organic peroxide includes α,α'-di(t-butylperoxy)diisopropylbenzene.

10. The toothed belt of claim 8 or 9, wherein
the hydrogenated nitrile rubber of the rubber composition is crosslinked using sulfur in addition to the organic peroxide.

11. The toothed belt of claim 10, wherein
a content of the sulfur in the not-yet-crosslinked rubber composition, which is the rubber composition before crosslinking, is less than a content of the organic peroxide.

12. The toothed belt of any one of claims 8 to 11, wherein
the hydrogenated nitrile rubber of the rubber composition is crosslinked using a co-crosslinking agent as well.

13. The toothed belt of claim 12, wherein
the co-crosslinking agent includes trimethylolpropane trimethacrylate.

14. The toothed belt of claim 13, wherein
the co-crosslinking agent includes m-phenylene maleimide in addition to the trimethylolpropane trimethacrylate.

15. The toothed belt of claim 14, wherein
a content of the trimethylolpropane trimethacrylate in the not-yet-crosslinked rubber composition, which is the rubber composition before crosslinking, is less than a content of the m-phenylene maleimide.
